# EUROPÄISCHE PATENTANMELDUNG

(11) **EP 2 357 712 A1**
(43) Veröffentlichungstag der Anmeldung: **17.08.2011**
(21) Anmeldenummer: 10001609.6
(22) Anmeldetag: 17.02.2010
(51) Int. Cl.: H02J 7/00, B60L 11/18, H01M 10/42

(54) **Ladesystem für einen Lithium-Akkumulator**

(71) Anmelder: MAFI Transport-Systeme GmbH, 97941 Tauberbischofsheim (DE)
(72) Erfinder: Kretzschmar, Gerd, 74199 Untergruppenbach (DE)
(74) Vertreter: Quermann, Helmut

(57) **Zusammenfassung**

Die Erfindung schlägt ein Ladesystem für einen Lithium-Akkumulator (1) vor.

Das Ladesystem weist diesen Akku (1), mindestens ein Ladegerät (8), eine Ladeleitung (11) und eine Ladekontrolleinheit (7) auf. Der Akku ist aus einzelnen Zellen (2) gebildet, die seriell oder parallel geschaltet sind. Die Ladeleitung (11) verbindet das Ladegerät (8) und die einzelnen Zellen (2). Die Ladekontrolleinheit (7) weist Mittel (9) zum Messen des vom Ladegerät abgegebenen Ladestroms auf. Den Zellen (2) sind Ausgleichsregler (3) zugeordnet. Die Ladekontrolleinheit ist mittels mindestens einer seriellen Busleitung (4, 6) mit den Ausgleichsreglem und dem Ladegerät verbunden, zwecks bidirektionalem Transfer von Daten sowie Ansteuerung der Zellen und des Ladegeräts.

Ein solches Ladegerät ermöglicht ein sicheres und damit beschädigungsfreies Laden und Entladen des aus einzelnen Zellen gebildeten Akkus.

## Beschreibung

Die Erfindung betrifft ein Ladesystem für einen Lithium-Akkumulator.

Ein Lithium-Akkumulator, kurz Lithium-Akku bezeichnet, und auch als Lithium-Ionen-Akku oder Lithium-lonen-Batterie bekannt, ist ein Akkumulator auf Basis von Lithium. Dieser Akkumulator zeichnet sich aus durch hohe Entlade-/Ladeströme bis zur fünffachen Nennkapazität, eine lange Zykluslebensdauer, die Einsatzmöglichkeit bei hohen und tiefen Temperaturen, Wartungsfreiheit und eine konstante Spannung über den gesamten Entladebereich aus, ferner durch nicht vorhandene Ausgleichsladungen und Gasungen beim Laden.

Der Nachteil eines solchen Lithium-Akkus liegt in dem relativ hohen Preis gegenüber einem Bleiakku. Ferner ist bei einem Lithium-Akku ein aufwändiges Lade-/Entlademanagement zum Schutz der Zellen des Akkus erforderlich.

So besteht bei wiederaufladbaren Akkus grundsätzlich das Problem, dass beim Aufladen eine Überladung verhindert werden muss. Insbesondere Lithium-Akkus sind gegenüber Ladung sehr empfindlich und können im Extremfall bei Überladung in Brand geraten oder gar explodieren. Andererseits ist man unter dem Aspekt einer möglichst langen Betriebsdauer des mit dem Akku betriebenen Gerätes daran interessiert, den Akku möglichst vollständig zu laden, d. h. seine Kapazität möglichst voll auszunutzen. Andererseits dürfen die einzelnen Zellen des Lithium-Akkus nicht unter eine Mindestspannung entladen werden. Eine einmal geschädigte Zelle, die somit zu weit auf- oder zu tief entladen worden ist, ist unbrauchbar.

Aufgabe der Erfindung ist es, ein Ladesystem für einen Lithium-Akku anzugeben, das ein sicheres und damit beschädigungsfreies Laden und Entladen des aus einzelnen Zellen gebildeten Akkus gewährleistet.

Die Erfindung schlägt ein Ladesystem für einen Lithium-Akku vor, mit dem Akku, mindestens einem Ladegerät, einer Ladeleitung und einer Ladekontrolleinheit, wobei der Akku aus einzelnen Zellen gebildet ist, die seriell oder parallel geschaltet sind, und die Ladeleitung das Ladegerät und die einzelnen Zellen verbindet, sowie die Ladekontrolleinheit Mittel zum Messen des vom Ladegerät abgegebenen Ladestroms beinhaltet, ferner mit den Zellen zugeordneten Ausgleichsreglern, wobei die Ladekontrolleinheit mittels mindestens einer seriellen Busleitung mit den Ausgleichsregiern und dem Ladegerät verbunden ist, zwecks bidirektionalem Transfer von Daten sowie Ansteuerung der Zellen und des Ladegeräts.

Die Verwendung des Ausgleichsreglers, auch als Balancer bezeichnet, erfolgt vor dem Hintergrund, dass die Lithium-Zellen des Akkus nicht über eine maximale Spannung hinaus geladen und nicht unter einer Mindestspannung entladen werden dürfen. Dieses Problem ist vor dem Hintergrund zu sehen, dass es technisch nicht möglich ist, alle Zellen mit identischen Eigenschaften herzustellen. In der Reihenschaltung eines Akkus würden ohne besondere Maßnahmen einzelne Zellen zu weit aufgeladen oder zu tief entladen werden, womit eine einmalig geschädigte Zelle unbrauchbar wäre. Der Ausgleichsregler hat die Aufgabe, die Zellunterschiede auszugleichen. Dies erfolgt insbesondere dadurch, dass der Ausgleichsregler beim Laden eine variable Gegenspannung erzeugt, die verhindert, dass einzelne Zellen überladen werden. Im Gegensatz zu einfachen Wiederstandsschaltungen setzt der Ausgleichsregler mit einem solchen Wirkungsprinzip nur einen kleinen Teil des Ladestroms in Wärme um, der größte Anteil bleibt für das Laden erhalten. Der Ausgleichsregler kann insbesondere Ladeströme bis maximal 50 A ausgleichen.

Lithium-Zellen halten über einen großen Entladebereich konstant ihre Ausgangsspannung von ca. 3,2V. Eine herkömmliche spannungsgeführte Entladeanzeige ist hierbei nicht möglich. Deshalb meldet der jeder Zelle zugeordnete Ausgleichsregler Statusinformationen dieser Zelle über ein Bussystem an die Ladekontrolleinheit weiter. In Arrray des Akkus leitet jede Zelle ihre Information in dieser Art weiter. Die Ladekontrolleinheit kann so jederzeit den Lade- oder Entladezustand der Batterie anzeigen. Beim Laden liegt der Vorteil der Ladekontrolleinheit darin, dass mehr Ladung in den Akku geladen werden kann, weil die Ladekontrolleinheit das Laden erst dann abschaltet, wenn die schwächste Zelle voll geladen ist oder wenn einer der Ausgleichsregler am Ende des Ausgleichsbereichs angekommen ist. Demzufolge kann durch Verwendung der Ladekontrolleinheit bezüglich des Lithium-Akkus dessen Lebensdauer verlängert, eine größere Kapazität genutzt und der Ladezustand gezeigt werden, ferner gewährleistet die Ladekontrolleinheit den Tiefentlade- und Überladeschutz der Zellen.

Der der jeweiligen Zelle zugeordnete Ausgleichsregler, der insbesondere als Platine ausgeführt ist, ist insbesondere in das Gehäuse der Zelle integriert. Grundsätzlich ist es auch denkbar, den Ausgleichsregler auf der Zelle zu platzieren, somit mit dem Zellgehäuse zu verbinden.

Demzufolge kann die Gesamtheit der Zellen bzw. der Akku komplett in ein Behältnis eingebaut sein. Es ist auch möglich, die Zellen frei in unterschiedliche Bauräume verteilt anzuordnen. Insbesondere ist vorgesehen, die Zellen bzw. den Akku in einem Fahrzeug einzubauen, vorzugsweise in einem Nutzfahrzeug, das ausschließlich elektromotorisch betrieben wird. Das Ladegerät kann extern aufgestellt sein oder in das Fahrzeug integriert sein.

Weitere Merkmale der Erfindung ergeben sich aus den Unteransprüchen und der nachfolgenden, detaillierteren Beschreibung der Komponenten des Ladesystems und des Ladeverfahrens, das sich auf bevorzugte Ausgestaltungen bezieht, wobei bemerkt wird, dass alle genannten Merkmale und Einzelmerkmale erfindungswesentlich sind.

Es findet insbesondere ein Lithium-Akku mit einer minimalen Ausgangsspannung von 60V Verwendung. Die maximal mögliche Ausgangsspannung liegt im Hochvoltbereich (350 ... 800V). Der Lithium-Akku besteht aus einzelnen Zellen mit einer Nominalspannung von 3,2V. Die Zellen können in jeder bekannten Lithium-Technik, derzeit bevorzugt in Lithium-Eisenphosphat oder in Lithium-Kobalt ausgeführt sein. Die geforderte Ausgangsspannung und die geforderte Akku-Kapazität werden durch Serien- und Parallelschaltung der Zellen erreicht. Die Gesamtheit der Zellen bzw. der Akku kann komplett in einem Behältnis eingebaut oder frei in die Bauräume eines Fahrzeugs verteilt sein. Auf jeder Zelle sitzt zwischen Plus- und Minuspol der Zelle eine mittels Mikrokontroller gesteuerte Platine, der Ausgleichsregler/Balancer, welche die Zellenspannung misst und protokolliert. Die Mess- bzw. Protokolldaten werden über einen oder mehrere serielle Busleitungen an die Ladekontrolleinheit übertragen. Als bevorzugter serieller Bus kommt für die Verbindung der Zellen untereinander der LIN-Bus und für die Verbindung nach außen der CAN-Bus zum Einsatz. Der Datenaustausch der einzelnen Zellen des Akku erfolgt bidirektional zwischen Zelle und Ladekontrolleinheit. Der Ausgleichsregler jeder Zelle leitet ab einer programmierbaren Zellenspannung einen Teilladestrom an der Zelle vorbei, um damit das Aufladen der Zelle künstlich zu verlangsamen. Damit haben langsame Zellen die Möglichkeit, in der Ladung aufzuholen, so dass alle Zellen des Akku nahezu gleich aufgeladen werden. Bei der Erstinbetriebnahme und auch im Fall eines Zellentausches werden die einzelnen Zellen mit einem definierten Ladezustand zu einem Akku zusammengebaut.

Als Ladegerät wird vorzugsweise ein handelsübliches Ladegerät für die Bleitechnologie verwendet. Die Ladung des Akku wird als I-U₀ Kennlinie oder als Netzgeräte-Nachbildung ausgeführt. Die Lithium-Technologie ermöglicht Ladeströme bis zum Fünffachen der Nennkapazität des Akku. So kann beispielsweise ein Akku mit 100Ah Kapazität mit bis zu 500A geladen werden. Lässt sich der erforderliche hohe Ladestrom nicht mit einem Ladegerät erreichen, werden zur Erreichung des Ladestroms zwei oder mehr Ladegeräte zu einem Cluster zusammengeschaltet. Das Einzelladegerät bzw. das Cluster kann von der Ladekontrolleinheit kontrolliert und gesteuert werden. Speziell in der Endphase der Ladung ist zu gewährleisten, dass der Strom des Ladegerätes gesenkt wird, insbesondere auf einen Wert unterhalb 30A.

Die Kommunikation mit dem Ladegerät erfolgt über einen seriellen Bus, bevorzugt CAN-Bus. Das Ladegerät bzw. die Ladegeräte werden mit einem oder mehreren Standard-Drehstromanschlüssen, insbesondere vom Typ CEE versorgt. Für die Verwendung des Ladesystems auf einem Flughafen, insbesondere bei einem auf dem Flughafenvorfeld eingesetzten Fahrzeug kann durch einen Vorschalttrafo der Anschluss an eine Energieversorgung mit 115V 400Hz und einer Leistung von 90kVA ermöglicht werden. Die Ladegeräte bzw. das Ladegerät können bzw. kann extern aufgestellt oder in das Fahrzeug integriert sein.

Die Ladekontrolleinheit ist insbesondere mittels Mikrokontroller gesteuert und mit digitalen und analogen Ein-/Ausgängen und mit seriellen Schnittstellen versehen.

Die Ladekontrolleinheit nimmt insbesondere folgende Aufgaben war:
1. Messung des Lade- und Entladestroms, insbesondere mittels eines Stromwandlers,
2. Berechnung des aktuellen Ladezustands des Akku über den zugeführten oder entnommenen Strom,
3. sicherheitsgerichtete Abschaltung des Lade- bzw. Entladevorganges, wenn Überladung oder Tiefentladung droht,
4. Steuerung analog oder seriell ansteuerbarer Akkuanzeigegeräte,
5. zyklische Datenabfrage der Akkuzellen,
6. statistische Auswertung der Lade- und Entladevorgänge,
7. Steuerung und Überwachung des Ladegeräts bzw. der Ladegeräte.

Gegebenenfalls erfolgt über die Ladekontrolleinheit auch ein Datenaustausch mit dem Verbraucher.

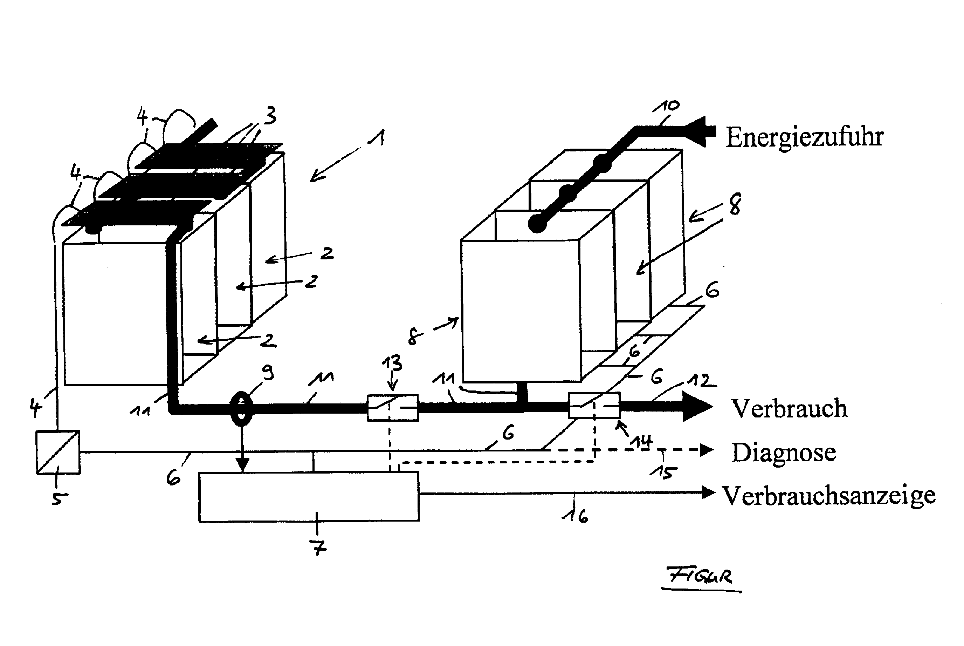

Nachfolgend ist anhand der der Figur veranschaulichten Prinzipsskizze das Ladesystem verdeutlicht und anhand dessen das Laden des Lithium-Akkus beschrieben:

Der Lithium-Akku 1 besteht aus einer Vielzahl von Lithium-Zellen 2, wobei in der Figur nur drei Lithium-Zellen 2 veranschaulicht sind. Sind beispielsweise 25 Zellen 2 mit jeweils einer Nominalspannung von 3,2V hintereinander geschaltet, ergibt sich eine Ausgangsspannung des Akkus 1 von 80V. Auf jeder Zelle 2 sitzt zwischen Plus- und Minuspol der Zelle 2 die Mikrokontroller gesteuerte Platine, somit der Ausgleichsregler 3 bzw. Balancer, welche die Zellenspannung misst und protokolliert. Die Mess- bzw. Protokolldaten werden über eine serielle Busleitung, konkret einen LIN-Bus 4 zunächst zu einem Gateway 5 weitergeleitet und von dort auf eine die Verbindung nach außen darstellende CAN-Busleitung 6 übertragen. Diese Mess- bzw. Protokolldaten werden über die Busleitung 4 und 6 an die Ladekontrolleinheit 7 übertragen. Der Datenaustausch der einzelnen Zellen 2 des Akku 1 erfolgt bidirektional zwischen Zelle 2 und Ladekontrolleinheit 7. Der Akku 1, der aus der Vielzahl von Zellen 2 besteht, wird somit von der Ladekontrolleinheit 7 durch Datenabfrage über den Bus 4 und 6 überwacht. Die Leitgröße für den Ladevorgang ist die Zellenspannung, für den Entladevorgang der tatsächlich entnommene Strom aus der Gesamtzahl der Zellen. Der Stromzufluss bzw. die Stromabgabe zwischen dem Ladegerät 8 und dem Akku 1 bzw. dem Akku 1 und einem Verbraucher wird von der Ladekontrolleinheit 7 über einen Stromwandler 9 oder über einen Shunt gemessen. Mehrere Ladegeräte 8, wie veranschaulicht drei Ladegeräte 8, können zu einem Cluster zusammengefasst sein. Als Ladegeräte werden handelsübliche Ladegeräte für die Bleitechnologie verwendet. Die Energie wird über eine Leitung 10 den Ladegeräten 8 zugeführt und von diesen über ein Leistungskabel 11 zum Akku 1, konkret zur ersten Zelle der im Ausführungsbeispiel in Serie geschalteten Zellen 2. Dem Leistungskabel 10 ist der Stromwandler 9 zugeordnet. Das Leistungskabel 11 zwischen Ladegerät 8 und Akku 1 ist mit einer Leitung 12 verbunden, die zu einem Verbraucher führt. Dem Leistungskabel 11 und der Leitung 12 sind mittels der Ladekontrolleinheit 7 ansteuerbare Schalter 13 und 14 zugeordnet zum Öffnen und Schließen des Stromdurchgangs im Leistungskabel 11 und der Leitung 12.

Über eine Statistik leitet die Ladekontrolleinheit 7 Informationen über den Zustand des Akku 1 und jeder einzelnen Zelle 2 ab. Diese "state of health" Informationen und auch Informationen über den äußeren Ladezustand ("state of charge") werden über eine Diagnoseschnittstelle 15 nach außen geführt. Über ein busfähiges Handheldgerät oder über ein festeingebautes Anzeigegerät können diese Informationen ausgelesen werden.

Die im Akku 1 gespeicherte Ladung wird von der Ladekontrolleinheit 7 fortlaufend berechnet und entsprechend werden die Verbrauchsanzeigen gesteuert, und zwar insbesondere beim Entladen und Laden wie folgt:
Entladen: Erreicht die gespeicherte Energie im Akku eine definierte untere Kapazitätsgrenze (typisch 20 %), werden zusätzliche optische und akustische Warnhinweise an den Verbraucher geschaltet.
   Erreicht die gespeicherte Energie im Akku eine Sicherheitsgrenze, dann wird der Energiefluss zum Verbraucher abgeschaltet. Die Verbrauchsanzeige und die Warnhinweise bleiben aktiv.
   Erreicht die Spannung einer Zelle einen unteren Grenzwert, dann wird der Energiefluss zum Verbraucher abgeschaltet. Die Anzeigen bleiben aktiv. Daten können über die Diagnoseschnittstelle ausgelesen werden.
Laden: Erreicht die Spannung einer Zelle einen definierten Schwellwert, dann schaltet die Ladekontrolleinheit die Stromstärke der Ladegeräte zurück.
   Mit dieser reduzierten Stromstärke können die Ausgleichsregler der Zellen für einen möglichst gleichmäßigen Ladungsaufbau in allen Zellen sorgen.
   Erreicht die Spannung einer Zelle den oberen Abschaltwert, dann wird das Ladegerät bzw. werden die Ladegeräte abgeschaltet.
   Im Falle, dass das Abschalten der Ladegeräte nicht über Bus funktioniert, kann die Ladekontrolleinheit 7 die Energiezufuhr in den Akku unterbrechen.

Die Ladekontrolleinheit 7 schaltet die Ladegeräte zu, sobald diese an die Versorgungsspannung angeschlossen werden und sich auf dem Bus melden. Während des Ladens wird der Verbraucher abgeschaltet. Über einen separaten Eingang an der Ladekontrolleinheit 7 kann für die Aufrechterhaltung einer Notversorgung die Sicherheitsabschaltung des Akku im Falle einer tiefen Entladung verhindert werden.

Für die Akkuverbrauchsanzeige gemäß der Verbrauchsanzeigenschnittstelle 16 werden bestehende Anzeigegeräte für Bleibatterien (Traktionsbatterien) durch die Ladekontrolleinheit 7 so manipuliert, dass diese korrekt bzw. adäquat zu Bleibatterien anzeigen. Diese Manipulation ist vor dem Hintergrund zu sehen, dass die Entladespannung einer Lithium-Zelle über weite Bereiche des internen Ladezustands konstant ist bzw. die Spannung nur im Bereich 0,1 ... 0,3V abfällt. Bei Bleibatterien hingegen fällt die Spannung in Relation zum Ladezustand deutlich ab. Damit können die Entladungsanzeigen unabhängig von einer Ladekontrolleinheit den Ladezustand über den Spannungsabfall ermitteln. Aufgrund der beschriebenen Manipulation der Anzeigegeräte für Bleibatterien durch die Ladekontrolleinheit ist es nicht erforderlich, dass der die Verbrauchsanzeige Lesende sich bei Verwendung eines Lithium-Akkus umorientiert.

## Patentansprüche

1. Ladesystem für einen Lithium-Akkumulator (1), mit dem Akku (1), mindestens einem Ladegerät (8), einer Ladeleitung (11) und einer Ladekontrolleinheit (7), wobei der Akku (1) aus einzelnen Zellen (2) gebildet ist, die seriell oder parallel geschaltet sind, und die Ladeleitung (11) das Ladegerät (8) und die einzelnen Zellen (2) verbindet, sowie die Ladekontrolleinheit (7) Mittel (9) zum Messen des vom Ladegerät (8) abgegebenen Ladestroms beinhaltet, ferner mit den Zellen (2) zugeordneten Ausgleichsreglern (3), wobei die Ladekontrolleinheit (7) mittels mindestens einer seriellen Busleitung (4, 6) mit den Ausgleichsreglern (3) und dem Ladegerät (8) verbunden ist, zwecks bidirektionalem Transfer von Daten sowie Ansteuerung der Zellen (2) und des Ladegeräts (8).

2. Ladesystem nach Anspruch 1, wobei der mit der jeweiligen Zelle (2) verbundene Ausgleichsregler (3) die Zellenspannung misst und protokolliert.

3. Ladesystem nach Anspruch 2, wobei über die serielle Busleitung (4, 6) die Mess- bzw. Protokolldaten der Ausgleichsregler (3) an die Ladekontrolleinheit (7) übertragen werden.

4. Ladesystem nach einem der Ansprüche 1 bis 3, wobei die serielle Busleitung für die Verbindung der Zellen untereinander eine LIN-Busleitung ist und/oder die serielle Busleitung zum Ladegerät eine CAN-Busleitung ist.

5. Ladesystem nach einem der Ansprüche 1 bis 4, wobei das Ladegerät (8) ein Ladegerät für die Bleitechnologie ist.

6. Ladesystem nach einem der Ansprüche 1 bis 5, wobei mehrere Ladegeräte (8, 8) zu einem Cluster zusammengeschaltet sind, wobei das einzelne Ladegerät (8) oder das Cluster von Ladegeräten (8, 8) von der Ladekontrolleinheit (7) kontrolliert und gesteuert wird.

7. Ladesystem nach einem der Ansprüche 1 bis 6, wobei die Ladekontrolleinheit (7)
- den Lade- und Entladestrom misst,
- den aktuellen Ladezustand des Akku (1) über den zugeführten oder entnommenen Strom misst,
- den Lade- bzw. Entladevorgang sicherheitsgerichtet abschaltet, wenn Überladung oder Tiefenentladung droht,
- analog oder seriell ansteuerbare Akkuanzeigegeräte steuert,
- die Daten der Zellen (2) zyklisch abfragt,
- die Lade- und Entladevorgänge statistisch auswertet,
- das Ladegerät (8) steuert und überwacht.

8. Ladesystem nach Anspruch 7, wobei die Ladekontrolleinheit (7) Daten mit einem Verbraucher austauscht.

9. Ladesystem nach einem der Ansprüche 1 bis 8, wobei der Stromfluss in der Ladeleitung (11) durch ein als Stromwandler (9) oder Shunt ausgebildetes Mittel (9) gemessen wird.

10. Ladesystem nach einem der Ansprüche 1 bis 9, wobei die Ladekontrolleinheit (7) eine Diagnoseschnittstelle (15) aufweist und von dieser über ein busfähiges Handheldgerät oder über ein fest eingebautes Anzeigegerät Daten der Ladekontrolleinheit (7) ausgelesen werden können.

11. Ladesystem nach einem der Ansprüche 1 bis 10, wobei im Akku (1) gespeicherte Ladung in der Ladekontrolleinheit (7) fortlaufend berechnet wird und entsprechend Verbrauchsanzeigen gesteuert werden.

12. Ladesystem nach einem der Ansprüche 1 bis 11, wobei die Ladekontrolleinheit (7) das Ladegerät (8) zuschaltet, sobald dieses an eine Versorgungsspannung angeschlossen ist und sich auf den Bus (4, 6) meldet.

13. Ladesystem nach einem der Ansprüche 1 bis 12, wobei für die Anzeige des Verbrauchs des Akkumulators (2) bestehende Anzeigegeräte für Bleibatterien durch die Ladekontrolleinheit (7) so manipuliert werden, dass diese korrekt bzw. adäquat zur Bleibatterie anzeigen.

14. Ladesystem nach einem der Ansprüche 1 bis 13, wobei die Gesamtheit der Zellen (2) oder der Akkumulator (1) komplett in ein Behältnis eingebaut oder frei in unterschiedliche Bauräume eingebaut ist, insbesondere in ein Behältnis oder unterschiedliche Bauräume in einem Fahrzeug eingebaut ist.

15. Ladesystem nach einem der Ansprüche 1 bis 14, wobei das Ladegerät (8) in ein Fahrzeug integriert ist oder extern aufgestellt ist.
